# EUROPEAN PATENT SPECIFICATION

(11) **EP 3 563 983 B1**
(45) Date of publication and mention of the grant of the patent: **05.07.2023**
(21) Application number: 19172333.7
(22) Date of filing: 02.05.2019
(51) Int. Cl.: B25J 9/16, B23K 9/235, B23K 9/10, B23K 26/08, G05B 19/4097

(54) **METHOD OF, AS WELL AS A SYSTEM FOR, PERFORMING A WELDING STEP ON A WORK PIECE**
VERFAHREN UND SYSTEM ZUM DURCHFÜHREN EINES SCHWEISSSCHRITTS AN EINEM WERKSTÜCK
PROCÉDÉ, AINSI QU'UN SYSTÈME POUR EFFECTUER UNE ÉTAPE DE SOUDAGE SUR UNE PIÈCE DE TRAVAIL

(30) Priority: 02.05.2018 NL 2020860
(43) Date of publication of application: 06.11.2019
(73) Proprietor: INSTANTPRO B.V., 6651 KK Druten (NL)
(72) Inventor: EXNER, Emil Johan, 6651 KK Druten (NL)
(74) Representative: Algemeen Octrooi- en Merkenbureau B.V.

(56) References cited:
- GB-A- 2 461 959
- NL-B1- 2 015 839
- US-A1- 2010 152 870
- US-A1- 2012 325 792

## Description

The present disclosure relates to a method of, as well as a system for, performing a welding step on a work piece, with an industrial robot, said industrial robot comprising a welding tool for performing said welding step.

An automated method of performing a welding step on a work piece is known from the state of the art. In this known method, a work piece is positioned in a handling machine. The dimensions of said work piece are determined by measuring the work piece either by hand or by a camera. Based on the measurements, welding positions on the work piece are identified, after which said welding step is performed by said handling machine.

GB 2461959 A, which forms the basis for the preamble of claims 1 and 8, discloses an automated guidance and recognition system for recognizing a work piece in three-dimensional space and being able to align a servo actuated manipulator relative to the work piece. In one embodiment said guidance and recognition system comprises a servo actuated manipulator configured to perform a function (such as welding), a camera mounted on a face plate of the manipulator, a recognition system configured to acquire a two dimensional image via the camera of at least a portion of at least one reference work piece and a manipulator controller configured to receive and store a position of the face plate at a distance "A" between the reference work piece and the manipulator along a coordinate axis of the reference work piece when the reference work piece image is acquired. The recognition system is further configured to learn the reference work piece based on the two dimensional image and the distance "A" associated with the reference work piece. In another embodiment said guidance and recognition system comprises a recognition controller comprising a database of at least one reference work piece. In this embodiment the recognition system is configured to acquire a two dimensional image via the camera of at least a portion of a production work piece, match the image of the production work piece with the reference work piece in the database, calculate a dimensional data offset between the image of the production work piece (by transforming (i.e. translation, rotation scaling) the image of the production work piece) and an image associated with the reference work piece, and signal the manipulator controller to move the manipulator to decrease the offset until the offset is below a threshold limit. The system of GB 2461959 A thus provides a system for adjusting the position of the manipulator relative to the work piece, based on a comparison between an image obtained by the camera and a learned image of a reference work piece, in order to be able to manipulate a work piece without calibration.
A drawback of the prior art is that the welding process is relatively complex and time consuming. Prior to performing said welding step, the entire work piece needs to be measured to identify the welding positions accurately. It is an object of the present disclosure to provide a method of performing a welding step which is less complex and less time consuming.

According to a first aspect, the present disclosure provides a method of performing a welding step on a work piece, with an industrial robot, said industrial robot comprising a welding tool for performing said welding step, said method comprising the steps of:
- obtaining a digital representation of a work piece using a 3D vision system such as a laser scanner device;
wherein the method comprises the steps of:
- comparing said obtained digital representation with a single model or a plurality of models in a database;
- obtaining at least one match between said single model or said plurality of models in said database and said obtained digital representation based on said comparisons by determining that said obtained digital representation of said work piece is inherently present in at least one matched model by fitting said plurality of models or said single model onto said obtained digital representation, wherein said fitting is performed by tilting, scaling and/or deforming said plurality of models or said single model such that positions of the obtained digital representation coincide with associated positions of a model thereby obtaining said match; and
- correcting said obtained digital representation to correspond with said at least one matched model by supplementing said obtained digital representation with a supplemented portion that is present in said at least one matched model but is not present in said obtained digital representation;
- performing said welding step on said work piece at a position corresponding to said supplemented portion based on said corrected digital representation.

By determining that said obtained digital representation of said work piece is inherently present in said at least one matched model, it is possible to correct said obtained digital representation to correspond with said matched model by supplementing said obtained digital representation with a supplemented portion that is present in said at least one matched model. This way, said corrected digital representation becomes a representation of said work piece, including all (theoretical) dimensions of said work piece. Said welding step can then be performed on said supplemented portion of said work piece based on said corrected digital representation.

In other words; with the method according to the present disclosure it is possible to perform said welding step on a portion of said work piece that was not initially detected by said 3D vision system. In that case, the portion that was not detected, is supplemented to the obtained digital representation generating a corrected digital representation of said work piece. Said welding step can then be performed on said work piece based on said corrected digital representation. With this method, it is thus possible to perform said welding step without having to measure the entire work piece.

Additionally, positioning (i.e. fitting) said matched model onto said obtained digital representation makes it possible to perform said welding step more accurately. Performing a welding step on a work piece with an industrial robot requires high precision. Often in practice, said work piece is slightly different from said (theoretical) matched model of said database due to, for instance, engineering tolerances of manufacturing. By taking into account these differences, especially those due to engineering tolerances, a more accurate corrected digital representation can be generated that is closer to the real dimensions said work piece. For example; said obtained digital representation of said work piece comprises physical dimensions of said work piece, whereas said (theoretical) matched model comprises dimensions including engineering tolerances, thus including a certain variation in physical dimensions of said work piece. By placing said matched model onto said obtained digital representation and adjusting said matched model according to said obtained digital representation, it is possible to perform said welding step while using more accurate information about said work piece. As a result, the location and/or size and/or form and/or orientation of said supplemented portion can be determined more accurately. This way, said welding step can be performed more accurately on said work piece.

In other words; by fitting said (theoretical) model(s) onto said obtained digital representation, it is possible to combine the measured physical dimensions of the obtained digital representation with theoretical dimensions including engineering tolerances of the matched model. In this case, the corrected digital representation can comprise a supplemented portion having engineering tolerances (i.e. a variance in dimensions), whereas the portion of the corrected digital representation that is formed by the obtained digital representation can be free from engineering tolerances.

Moreover, it is also possible to take into account other types of deformations present in said obtained digital representation. Such deformations in said obtained digital representation are the result of deformations in said work piece, being, for instance, dents, or bends, etc., caused by usage or manufacturing of said work piece.

Within the context of this disclosure with a 3D vision system is meant; a vision system capable of determining the dimensions of a work piece. This definition includes a 2D vision system, such as a radiation sensitive camera, capable of determining height differences. Said 3D vision system can be positioned at a distance of said work piece either stationary or moveable. In case said 3D vision system is movable. Preferably, in case said 3D vision system is movable, it is movable in a single plane at a distance of said work piece.

It was one of the insights of the inventors that such 3D vision systems may be inaccurate to a certain level. That is, the 3D vision systems may not detect portions of the work piece that are actually present. The 3D vision systems may thus miss certain portions of the work piece during the obtaining process. One of the reasons is that the 3D vision systems typically obtains the digital representation of the work piece from one single side, for example from above the work piece. When viewed from above, certain aspects of the work piece may not be detected. The present disclosure is directed to these undetected parts of the work piece.

It is noted that, in accordance with the present disclosure, the 3D vision system may be implemented in various manners. For example, a scanner device may be utilized which scans the work piece. Such a scanner device may obtain a 3D cloud representation of the work piece, i.e. a point cloud representation. A point cloud is considered a set of data points in a particular coordinate system. In another example, the 3D vision system may be implemented using at least two camera's.

In any way, the 3D vision system may not detect portions of the work piece that are actually present.

Within the context of this disclosure a match is made only when the features of said obtained representation of said work piece are completely present in said matched model of said database. The above entails that the obtained digital representation should be a part of said matched model of the database. The obtained digital representation may then be an integral part of the matched model of the database.

Within the context of this disclosure with the term "model" is meant, for instance, a computer design such as a CAD-drawing. Said single model can comprise multiple parts.

Examples according to the present invention are described in the following.

In an example of the first aspect according to the present disclosure said single model is a theoretical model comprising theoretical dimensions including engineering tolerances of said work piece, or said plurality of models are theoretical models comprising theoretical dimensions including engineering tolerances of said work piece. An advantage of this example is that the engineering tolerances can be used to estimate the position of the work piece. Moreover, said model(s) can be directly obtained from said database. It is thus not necessary to learn a model by scanning one of a type of work piece that is to be learned, prior to starting welding activities.

In an example of the first aspect according to the present disclosure a method is provided, wherein said fitting is performed by tilting and/or scaling and/or deforming said matched model, such that positions of the obtained digital representation coincide with associated positions of said matched model. In particular, (the form, size and orientation of) said obtained digital representation remains unchanged during said fitting. An advantage of this example is that the matched model can be adjusted such that it can overlap said obtained digital representation, wherein the shape of said digital representation completely coincides with the shape of the matched model. This way it is ensured that, prior to the welding step, the matched model and thereby the supplemented portion, fits the orientation of said work piece, such that the welding step can be performed more accurately. Another advantage is that that the matched model is can be adjusted to match the obtained digital representation (and not the other way around). This way, the physical dimensions obtained, i.e. observed, by the vision system can be used to more accurately perform said step of welding. In particular, the observed physical dimensions of the work piece can be used in so far they are known from the obtained digital representation. This way it is possible to more accurately perform a welding step on the work piece.

In an example of the first aspect, a method is provided wherein a match is found when said comparison between said obtained digital representation and a model of said plurality of models in said database surpasses a correlation threshold value. An advantage of this example is that this example is relatively efficient. The inventor found that it is possible to reduce the time spent on finding a match, while still ensuring that said matches are useful for performing said welding step with.

In an example according to the first aspect of the present disclosure said correlation threshold value is at least 95%. An advantage of this example is that a relatively high accuracy is ensured.

The correlation threshold value may be determined in several ways. For example, the correlation threshold value may be based on a ratio between the total volume of the obtained digital representation to the total volume of the matched model in the database. This does assume that the obtained digital representation is at least inherently present in, i.e. a part of, the matched model in the database. Another option is that the correlation threshold value is based on a ratio between the total amount of points of the obtained digital representation to the total amount of points of the matched model of the database.

The above thus entails that the supplemented portion may supplement the obtained digital representation to 100% of the matched model. The obtained digital representation supplemented with the supplemented portion may thus equal the matched model.

In an example according to the first aspect of the present disclosure said correlation threshold value is determined based on a history of prior matches. An advantage of this example is that the efficiency of said method can be improved, as a match can be found relatively fast.

In an example according to the first aspect of the present disclosure said laser scanner device passes said work piece from one side. An advantage of this example is that said step of obtaining said digital representation can be done relatively fast.

In a second aspect the present disclosure provides a system for performing a welding step on a work piece, comprising:
- an industrial robot, comprising:
   - a welding tool for performing said welding step;
- a 3D vision system, such as a laser scanner device, for obtaining a digital representation of a work piece;
- a processing unit having a communication unit for communicating with said industrial robot;
wherein said system comprises:
- a database comprising a single model or a plurality of models; and said processing unit is arranged for:
   - comparing said obtained digital representation with said single model or said plurality of models in said database,
   - obtaining at least one match between said single model or said plurality of models in said database and said obtained digital representation based on said comparisons, by determining that said obtained digital representation of said work piece is inherently present in said at least one matched model by fitting said matched model onto said obtained digital representation, wherein said fitting is performed by tilting, scaling and/or deforming said matched model such that positions of the obtained digital representation coincide with associated positions of said matched model, and
   - correcting said digital representation to correspond with said at least one matched model by supplementing said digital representation with a supplemented portion that is present in said at least one matched model but not in said obtained digital representation;
   - communicating to said industrial robot to perform said welding step on said work piece at a position corresponding to said supplemented portion based on said corrected digital representation.

In accordance with the present disclosure, different aspects applicable to the above mentioned examples of the method, including the advantages thereof, correspond to the aspects which are applicable to the system according to the present disclosure.

In an example according to the second aspect of the present disclosure said database contains meta data comprising relevant welding positions of each model of said plurality of models in said database. An advantage of this example is that the correct welding positions can be provided directly.

In an example according to the second aspect of the present disclosure said processor unit is arranged for fitting said matched model onto said obtained digital representation. Advantages of examples of the second aspect have been described above.

In an example according to the second aspect of the present disclosure said processor unit is further arranged for tilting and/or scaling and/or deforming said matched model, such that positions of the obtained digital representation coincide with associated positions of said matched model. An advantage of this example has been described above.

In an example according to the second aspect of the present disclosure said single model or said plurality of models is a (are) theoretical model(s) comprising theoretical dimensions including engineering tolerances of said work piece.

In an example according to the second aspect of the present disclosure said processing unit is arranged for maintaining (the form, size and orientation of) said obtained digital representation unchanged during said fitting.

The above-mentioned and other features and advantages of the present disclosure will be best understood from the following description referring to the attached drawings. In the drawings, like reference numerals denote identical parts or parts performing an identical or comparable function or operation.
Figure 1 presents a flow chart of an example of a method of performing a welding step on a work piece according to the present disclosure.
Figure 2 presents a schematic example of a 3D vision system and a work piece according to the present disclosure.
Figure 3 presents a schematic example of an, by said 3D vision system, obtained digital representation of the work piece of figure 2.

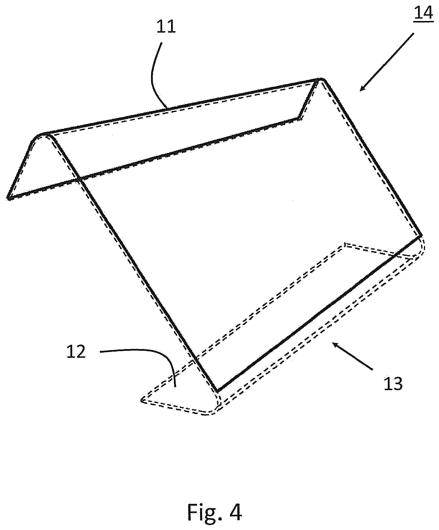

Figure 4 presents a schematic example of a corrected obtained digital representation of said work piece of figure 2, including a supplemented portion.

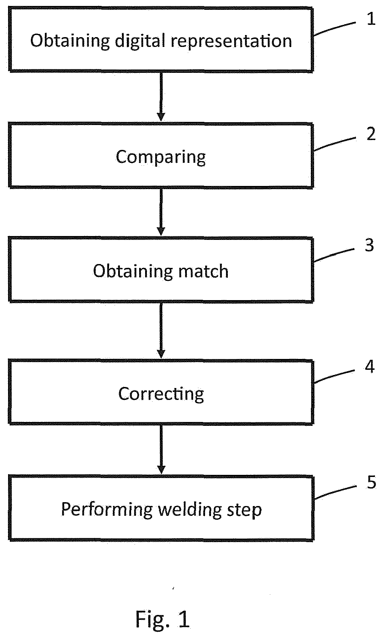

Figure 1 presents a flow chart of an example of a method of performing a welding step on a work piece, with an industrial robot. Said industrial robot comprises a welding tool for performing said welding step. Said method comprising the steps of:
- obtaining 1 a digital representation 11 of a work piece using a 3D vision system 6 such as a laser scanner device;
- comparing 2 said obtained digital representation 11 with a plurality of models in a database;
- obtaining at least one match 3 between said plurality of models in said database and said obtained digital representation 11 based on said comparisons by determining that said obtained digital representation 11 of said work piece is inherently present in at least one matched model 13;
- correcting 4 said obtained digital representation 11 to correspond with said at least one matched model 13 by supplementing said obtained digital representation 11 with a supplemented portion 12 that is present in said at least one matched model 13 but is not present in said obtained digital representation 11; and
- performing 5 said welding step on said work piece 7 at a position corresponding to said supplemented portion 12 based on said corrected digital representation 14.

Said industrial robot comprising said welding tool (not shown) is known from the state of the art. Preferably said welding tool is mounted on an arm of said industrial robot, wherein said arm is freely movable. More in particular said arm has six degrees of freedom.

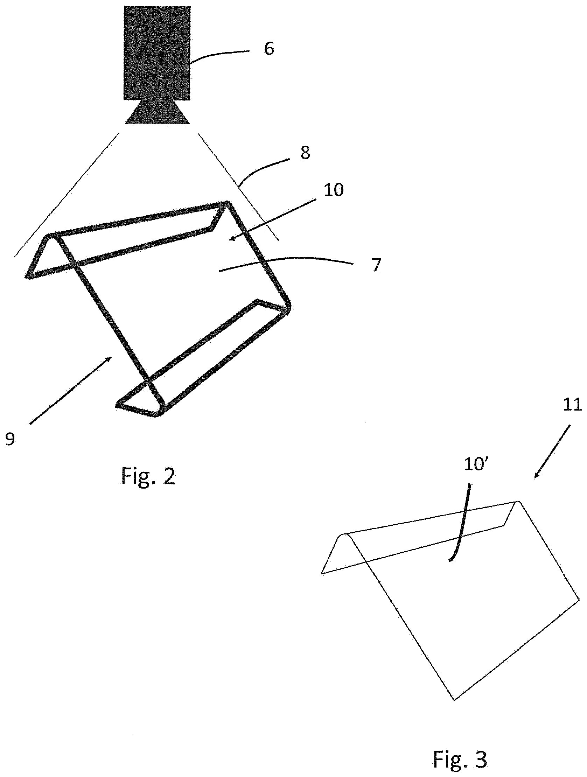

Said step of obtaining 1 a digital representation 11 of a work piece 7 is performed using a 3D vision system 6. In an example said 3D vision system 6 is arranged at a distance from said work piece 7, wherein said work piece 7 is positioned within a field of view 8 of said 3D vision system 6. In Figure 2 said 3D vision system 6 is disposed stationary above said work piece 7.

Said work piece 7 comprises a front side 10 facing said 3D vision system 6, and a backside 9 facing away from said 3D vision system 6. As said backside 9 is facing away from said 3D vision system 6, said backside 9 is not directly visible to said 3D vision system 6.

Said 3D vision system 6 can comprise any known device for generating a digital representation 11 of said work piece 7, such as, for instance, a laser scanner device, a camera or multiple camera's, a sonar device, or electromagnetic device.

In an example said 3D vision system 6 is arranged for generating a point cloud of said work piece 7. In this case said 3D vision system measures a plurality of points on said front side 10 of said work piece 7.

Said point cloud 7 forms a digital representation 11 of said work piece 7 as can be seen in Figure 3. Said digital representation 11 has a front side 10' corresponding to said front side 10 of said work piece 7. It is apparent that said digital representation 11 of Figure 3 misses a portion, that said work piece 7 in reality does possess, corresponding to said back side 9 of said work piece 7. This missing portion lies outside of said field of view 8 of said 3D vision system, and has therefore not been recorded.

In an example said 3D vision system 6 comprises a laser scanner device capable of recording a plurality of positions at said front side 10 of said work piece 7, and a computing device for providing a digital representation of the recordings of said laser scanner device. In a particular example said 3D vision system 6 comprises a laser scanner device, and a communication device for communicating measurements of said laser scanner device with a computing device.

When a digital representation 11 of said work piece 7 has been generated, said obtained digital representation 11 is compared with a plurality of models in a database (not shown).

When a match is found between a model of said plurality of models and said obtained digital representation 11, said matched model 13 is positioned onto said obtained digital representation 11 such that most measured positions corresponding to said front side 10 of said work piece 7 coincide with associated positions of said front side 10' of said digital representation 11. With this is meant, that said matched model 13 overlaps said digital representation 11 in such a way that a supplemented portion 12, being a portion that is missing in said obtained digital representation 11 but is present in said matched model 13, is visible. As such, said obtained digital representation 11 is corrected to correspond with said matched model 13. Said corrected digital representation 14 can be used for performing said welding step.

In case there is a difference in scale and/or orientation between said obtained digital representation 11 and said matched model 13, the orientation of said matched model 13 is adjusted. This is, for instance, done by enlarging/reducing said matched model 13 and/or changing the three dimensional orientation of said matched model 13 by tilting/angling it over at least one or all of its dimensional axes.

It is also possible that deformations are present in said obtained digital representation 11, due to deformations present in said work piece 7. Such deformations are, for example, caused by usage and/or during manufacturing of said work piece 7. In this case, said matched model 13 can be adjusted to correspond with said obtained digital representation 11 to include said deformations. In other words; said matched model 13 can be deformed according to said deformations of said obtained digital representation 11 such that positions of said obtained digital representation 11 coincide with associated positions of said matched model 13.

In an example a match is found when said comparison 2 between said obtained digital representation 11 and a model of said plurality of models of said database surpasses a correlation threshold value. In an example said correlation threshold value is at least 65%, more in particular 85%, and even more in particular 95%.

In a second aspect of the present disclosure a system for performing a welding step on a work piece is provided. Said system comprises:
- an industrial robot (not shown), comprising:
- a welding tool for performing 5 said welding step;
- a 3D vision system 6, such as a laser scanner device, for obtaining 1 a digital representation 11 of a work piece;
- a processing unit (not shown) having a communication unit for communicating with said industrial robot;
- a database (not shown) comprising a plurality of models; and
said processing unit is arranged for:
- comparing 2 said obtained digital representation 11 with said plurality of models in said database,
- obtaining 3 at least one match between said plurality of models in said database and said obtained digital representation 11 based on said comparisons, by determining that said obtained digital representation 11 of said work piece 7 is inherently present in said at least one matched model 13, and
- correcting 4 said obtained digital representation to correspond with said at least one matched model 13 by supplementing said obtained digital representation 11 with a supplemented portion 12 that is present in said at least one matched model 13 but not in said obtained digital representation 11;
- communicating to said industrial robot to perform 5 said welding step on said work piece 7 at a position corresponding to said supplemented portion 12 based on said corrected digital representation 14.

In an example said processing unit comprises a processor, a user interface having a screen and input tools such as a mouse and a keyboard, and a communication unit for communicating with said industrial robot, and said industrial robot comprises communication means for communicating with said communication unit of said processing unit. If necessary, an operator can manually adjust said obtained digital representation 11, said matched model 13, each of said plurality of models of said database and/or said corrected digital representation 14 with said supplemented portion 12 separately or with respect to each other.

In an example said database comprises meta data comprising, for instance, predetermined welding positions of each model, material characteristics, and/or dimensional information of each model such as height, width, length, angles, engineering tolerances, etc.

Although only a few example embodiments have been described in detail above, those skilled in the art will readily appreciate that many modifications are possible in the example embodiments. Accordingly, such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. Method of performing a welding step on a work piece (7), with an industrial robot, said industrial robot comprising a welding tool for performing said welding step, said method comprising the steps of:
- obtaining (1) a digital representation (11) of a work piece (7) using a 3D vision system (6) such as a laser scanner device;
wherein the method comprises the steps of:
- comparing (2) said obtained digital representation (11) with a single model or a plurality of models in a database;
- obtaining (3) at least one match between said single model or said plurality of models in said database and said obtained digital representation (11) based on said comparisons by determining that said obtained digital representation (11) of said work piece (7) is inherently present in at least one matched model (13), wherein
- said step of obtaining (3) at least one match between said single model or said plurality of models in said database and said obtained digital representation comprises fitting said plurality of models or said single model onto said obtained digital representation (11), wherein said fitting is performed by tilting, scaling and/or deforming said plurality of models or said single model such that positions of the obtained digital representation (11) coincide with associated positions of a model thereby obtaining said match; and **characterized in that** said method further comprises the steps of:
- correcting (4) said obtained digital representation (11) to correspond with said at least one matched model (13) by supplementing said obtained digital representation (11) with a supplemented portion (12) that is present in said at least one matched model (13) but is not present in said obtained digital representation (11); and
- performing (5) said welding step on said work piece (7) at a position corresponding to said supplemented portion (12) based on said corrected digital representation (14).

2. Method according to claim 1, wherein said single model or said plurality of models is a (are) theoretical model(s) comprising theoretical dimensions including engineering tolerances of said work piece (7).

3. Method according to claim 1 or 2, wherein said obtained digital representation (11) remains unchanged during said fitting.

4. Method according to any of the previous claims, wherein a match is found when said comparison between said obtained digital representation (11) and said single model or a model of said plurality of models in said database surpasses a correlation threshold value.

5. Method according to claim 4, wherein said correlation threshold value is at least 95%.

6. Method according to claim 4 or 5, wherein said correlation threshold value is determined based on a history of prior matches.

7. Method according to any of the previous claims, wherein said step of obtaining (1) a digital representation (11 ) of a work piece (7) comprises:
- scanning, by said laser scanner device (6), said work piece (7) from one side.

8. System for performing a welding step on a work piece (7), comprising:
- an industrial robot, comprising:
- a welding tool for performing said welding step;
- a 3D vision system (6), such as a laser scanner device, for obtaining a digital representation (11) of a work piece (7);
- a processing unit having a communication unit for communicating with said industrial robot;
wherein said system comprises:
- a single model or a database comprising a plurality of models; and said processing unit is arranged for:
- comparing (2) said obtained digital representation (11) with said single model or said plurality of models in said database,
- obtaining (3) at least one match between said single model or said plurality of models in said database and said obtained digital representation (11) based on said comparisons, by determining that said obtained digital representation (11) of said work piece (7) is inherently present in said at least one matched model (13) by fitting said matched model (13) onto said obtained digital representation (11), wherein said fitting is performed by tilting, scaling and/or deforming said matched model (13) such that positions of the obtained digital representation (11) coincide with associated positions of said matched model (13); **characterized in that** said processing unit is further arranged for :
- correcting (4) said digital representation (11) to correspond with said at least one matched model (13) by supplementing said digital representation (11) with a supplemented portion (12) that is present in said at least one matched model (13) but not in said obtained digital representation (11); and
- communicating to said industrial robot to perform said welding step on said work piece (7) at a position corresponding to said supplemented portion (12) based on said corrected digital representation (14).

9. System according to claim 8, wherein said database comprises meta data comprising welding positions of each model.

10. System according to claim 8 or 9, wherein said single model or said plurality of models is a (are) theoretical model(s) comprising theoretical dimensions including engineering tolerances of said work piece (7).

11. System according to claim 8 to 10, wherein processing unit is arranged for keeping said obtained digital representation unchanged during said fitting.

## Patentansprüche

1. Verfahren zum Durchführen eines Schweißschrittes an einem Werkstück (7) mit einem Industrieroboter, wobei der Industrieroboter ein Schweißwerkzeug zum Durchführen des Schweißschrittes umfasst, wobei das Verfahren die folgenden Schritte umfasst:
Erhalten (1) einer digitalen Repräsentation (11) eines Werkstücks (7) unter Verwendung eines 3D-Vision-Systems (6), wie etwa einer Laserabtastvorrichtung;
wobei das Verfahren die folgenden Schritte umfasst:
Vergleichen (2) der erhaltenen digitalen Repräsentation (11) mit einem einzelnen Modell oder einer Vielzahl von Modellen in einer Datenbank;
Erhalten (3) mindestens einer Übereinstimmung zwischen dem einzelnen odell oder der Vielzahl von Modellen in der Datenbank und der erhaltenen digitalen Repräsentation (11) auf der Grundlage der Vergleiche durch Bestimmen, dass die erhaltene digitale Repräsentation (11) des Werkstücks (7) inhärent in mindestens einem übereinstimmenden Modell (13) vorhanden ist,
wobei
der Schritt des Erhaltens (3) mindestens einer Übereinstimmung zwischen dem einzelnen Modell oder der Vielzahl von Modellen in der Datenbank und der erhaltenen digitalen Repräsentation das Anpassen der Vielzahl von Modellen oder des einzelnen Modells an die erhaltene digitale Repräsentation (11) umfasst, wobei das Anpassen durch Neigen, Skalieren und/oder Verformen der Vielzahl von Modellen oder des einzelnen Modells durchgeführt wird, derart, dass Positionen der erhaltenen digitalen Repräsentation (11) mit zugehörigen Positionen eines Modells zusammenfallen, wodurch die Übereinstimmung erhalten wird; und **dadurch gekennzeichnet, dass** das Verfahren ferner die folgenden Schritte umfasst:
Korrigieren (4) der erhaltenen digitalen Repräsentation (11), damit sie dem mindestens einen übereinstimmenden Modell (13) entspricht, indem die erhaltene digitale Repräsentation (11) mit einem ergänzten Abschnitt (12) ergänzt wird, der im mindestens einen übereinstimmenden Modell (13) vorhanden ist, aber nicht in der erhaltenen digitalen Repräsentation (11) vorhanden ist; und
Durchführen (5) des Schweißschrittes am Werkstück (7) an einer Position, die dem ergänzten Abschnitt (12) entspricht, auf der Grundlage der korrigierten digitalen Repräsentation (14).

2. Verfahren nach Anspruch 1, wobei das einzelne Modell oder die Vielzahl von Modellen ein oder mehrere theoretische Modelle sind, die theoretische Abmessungen einschließlich technischer Toleranzen des Werkstücks (7) umfassen.

3. Verfahren nach Anspruch 1 oder 2, wobei die erhaltene digitale Repräsentation (11) während des Anpassens unverändert bleibt.

4. Verfahren nach einem der vorhergehenden Ansprüche, wobei eine Übereinstimmung gefunden wird, wenn der Vergleich zwischen der erhaltenen digitalen Repräsentation (11) und dem einzelnen Modell oder einem Modell der Vielzahl von Modellen in der Datenbank einen Korrelationsschwellenwert überschreitet.

5. Verfahren nach Anspruch 4, wobei der Korrelationsschwellenwert mindestens 95 % beträgt.

6. Verfahren nach Anspruch 4 oder 5, wobei der Korrelationsschwellenwert auf der Grundlage einer Historie früherer Übereinstimmungen bestimmt wird.

7. Verfahren nach einem der vorhergehenden Ansprüche, wobei der Schritt des Erhaltens (1) einer digitalen Repräsentation (11) eines Werkstücks (7) umfasst:
- Abtasten, durch die Laserabtastvorrichtung (6), des Werkstücks (7) von einer Seite.

8. System zum Durchführen eines Schweißschrittes an einem Werkstück (7), umfassend:
einen Industrieroboter, umfassend:
ein Schweißwerkzeug zum Durchführen des Schweißschrittes;
ein 3D-Vision-System (6), wie etwa eine Laserabtastvorrichtung, zum Erhalten einer digitalen Repräsentation (11) eines Werkstücks (7);
eine Verarbeitungseinheit mit einer Kommunikationseinheit zum Kommunizieren mit dem Industrieroboter;
wobei das System umfasst:
ein einzelnes Modell oder eine Datenbank, die eine Vielzahl von Modellen umfasst; und die Verarbeitungseinheit für folgende Vorgänge eingerichtet ist:
Vergleichen (2) der erhaltenen digitalen Repräsentation (11) mit dem einzelnen Modell oder der Vielzahl von Modellen in der Datenbank,
Erhalten (3) mindestens einer Übereinstimmung zwischen dem einzelnen Modell oder der Vielzahl von Modellen in der Datenbank und der erhaltenen digitalen Repräsentation (11) auf der Grundlage der Vergleiche durch Bestimmen, dass die erhaltene digitale Repräsentation (11) des Werkstücks (7) inhärent in mindestens einem übereinstimmenden Modell (13) vorhanden ist, indem das übereinstimmende Modell (13) an die erhaltene digitale Repräsentation (11) angepasst wird, wobei das Anpassen durch Neigen, Skalieren und/oder Verformen des übereinstimmenden Modells (13) durchgeführt wird, derart, dass Positionen der erhaltenen digitalen Repräsentation (11) mit zugehörigen Positionen des übereinstimmenden Modells (13) zusammenfallen; **dadurch gekennzeichnet, dass** die Verarbeitungseinheit ferner zu folgenden Vorgängen eingerichtet ist:
Korrigieren (4) der digitalen Repräsentation (11), damit sie dem mindestens einen übereinstimmenden Modell (13) entspricht, indem die digitale Repräsentation (11) mit einem ergänzten Abschnitt (12) ergänzt wird, der im mindestens einen übereinstimmenden Modell (13) vorhanden ist, aber nicht in der erhaltenen digitalen Repräsentation (11); und
Kommunikation an den Industrieroboter zum Durchführen des Schweißschrittes am Werkstück (7) an einer Position, die dem ergänzten Abschnitt (12) entspricht, auf der Grundlage der korrigierten digitalen Repräsentation (14).

9. System nach Anspruch 8, wobei die Datenbank Metadaten umfasst, die Schweißpositionen jedes Modells umfassen.

10. System nach Anspruch 8 oder 9, wobei das einzelne Modell oder die Vielzahl von Modellen ein oder mehrere theoretische Modelle sind, die theoretische Abmessungen einschließlich technischer Toleranzen des Werkstücks (7) umfassen.

11. System nach einem der Ansprüche 8 bis 10, wobei die Verarbeitungseinheit so eingerichtet ist, dass sie die erhaltene digitale Repräsentation während des Anpassens unverändert lässt.

## Revendications

1. Procédé de réalisation d'une étape de soudage sur une pièce à usiner (7), avec un robot industriel, ledit robot industriel comprenant un outil de soudage pour réaliser ladite étape de soudage, ledit procédé comprenant les étapes de :
- obtention (1) d'une représentation numérique (11) d'une pièce à usiner (7) à l'aide d'un système de vision 3D (6) tel qu'un dispositif de balayage laser ;
dans lequel le procédé comprend les étapes de :
- comparaison (2) de ladite représentation numérique obtenue (11) à un modèle unique ou à une pluralité de modèles dans une base de données ;
- obtention (3) d'au moins une concordance entre ledit modèle unique ou ladite pluralité de modèles dans ladite base de données et ladite représentation numérique obtenue (11) sur la base desdites comparaisons en déterminant que ladite représentation numérique obtenue (11) de ladite pièce à usiner (7) est intrinsèquement présente dans au moins un modèle concordant (13),
dans lequel
- ladite étape d'obtention (3) d'au moins une concordance entre ledit modèle unique ou ladite pluralité de modèles dans ladite base de données et ladite représentation numérique obtenue comprend l'ajustement de ladite pluralité de modèles ou dudit modèle unique sur ladite représentation numérique obtenue (11), dans lequel ledit ajustement est réalisé en inclinant, mettant à l'échelle et/ou déformant ladite pluralité de modèles ou ledit modèle unique de sorte que les positions de la représentation numérique obtenue (11) coïncident avec les positions associées d'un modèle obtenant ainsi ladite concordance ; et **caractérisé en ce que** ledit procédé comprend en outre les étapes de :
- correction (4) de ladite représentation numérique obtenue (11) pour correspondre audit au moins un modèle concordant (13) en complétant ladite représentation numérique obtenue (11) par une partie complétée (12) qui est présente dans ledit au moins un modèle concordant (13) mais qui n'est pas présente dans ladite représentation numérique obtenue (11) ; et
- la réalisation (5) de ladite étape de soudage sur ladite pièce à usiner (7) à une position correspondant à ladite partie complétée (12) sur la base de ladite représentation numérique corrigée (14).

2. Procédé selon la revendication 1, dans lequel ledit modèle unique ou ladite pluralité de modèles est/sont un/des modèle(s) théorique(s) comprenant des dimensions théoriques incluant des tolérances d'ingénierie de ladite pièce à usiner (7).

3. Procédé selon la revendication 1 ou 2, dans lequel ladite représentation numérique obtenue (11) reste inchangée lors dudit ajustement.

4. Procédé selon l'une des revendications précédentes, dans lequel une concordance est trouvée lorsque ladite comparaison entre ladite représentation numérique obtenue (11) et ledit modèle unique ou un modèle de ladite pluralité de modèles dans ladite base de données dépasse une valeur de seuil de corrélation.

5. Procédé selon la revendication 4, dans lequel ladite valeur de seuil de corrélation est d'au moins 95%.

6. Procédé selon la revendication 4 ou 5, dans lequel ladite valeur de seuil de corrélation est déterminée sur la base d'un historique de concordances antérieures.

7. Procédé selon l'une des revendications précédentes, dans lequel ladite étape d'obtention (1) d'une représentation numérique (11) d'une pièce à usiner (7) comprend :
- le balayage, par ledit dispositif de balayage laser (6), de ladite pièce à usiner (7) d'un côté.

8. Système de réalisation d'une étape de soudage sur une pièce à usiner (7), comprenant :
- un robot industriel, comprenant :
- un outil de soudage pour réaliser ladite étape de soudage ;
- un système de vision 3D (6), tel qu'un dispositif de balayage laser, pour obtenir une représentation numérique (11) d'une pièce à usiner (7) ;
- une unité de traitement ayant une unité de communication pour communiquer avec ledit robot industriel ;
dans lequel ledit système comprend :
- un modèle unique ou une base de données comprenant une pluralité de modèles ; et
ladite unité de traitement est agencée pour :
- comparer (2) ladite représentation numérique obtenue (11) audit modèle unique ou à ladite pluralité de modèles dans ladite base de données,
- obtenir (3) au moins une concordance entre ledit modèle unique ou ladite pluralité de modèles dans ladite base de données et ladite représentation numérique obtenue (11) sur la base desdites comparaisons, en déterminant que ladite représentation numérique obtenue (11) de ladite pièce à usiner (7) est intrinsèquement présente dans ledit au moins un modèle concordant (13) en ajustant ledit modèle concordant (13) sur ladite représentation numérique obtenue (11),
dans lequel ledit ajustement est réalisé en inclinant, mettant à l'échelle et/ou déformant ledit modèle concordant (13) de sorte que les positions de la représentation numérique obtenue (11) coïncident avec les positions associées dudit modèle concordant (13) ; **caractérisé en ce que** ladite unité de traitement est en outre agencée pour :
- corriger (4) ladite représentation numérique (11) pour correspondre audit au moins un modèle concordant (13) en complétant ladite représentation numérique (11) par une partie complétée (12) qui est présente dans ledit au moins un modèle concordant (13) mais pas dans ladite représentation numérique obtenue (11) ; et
- communiquer avec ledit robot industriel pour réaliser ladite étape de soudage sur ladite pièce à usiner (7) à une position correspondant à ladite partie complétée (12) sur la base de ladite représentation numérique corrigée (14).

9. Système selon la revendication 8, dans lequel ladite base de données comprend des métadonnées comprenant des positions de soudage de chaque modèle.

10. Système selon la revendication 8 ou 9, dans lequel ledit modèle unique ou ladite pluralité de modèles est/sont un/des modèle(s) théorique(s) comprenant des dimensions théoriques incluant des tolérances d'ingénierie de ladite pièce à usiner (7).

11. Système selon les revendications 8 à 10, dans lequel l'unité de traitement est agencée pour maintenir inchangée ladite représentation numérique obtenue lors dudit ajustement.
